# EUROPEAN PATENT SPECIFICATION

(11) **EP 0 611 387 B1**
(45) Date of publication and mention of the grant of the patent: **24.01.1996**
(21) Application number: 92925226.0
(22) Date of filing: 06.11.1992
(51) Int. Cl.: C09J 11/06, C09J 9/00

(54) **A SELF-FADING COLOR ADHESIVE**
SELBSTENTFÄRBENDES FARBKLEBMITTEL
ADHESIF COLORE AUTO-DECOLORANT

(30) Priority: 08.11.1991 JP 293470/91
(43) Date of publication of application: 24.08.1994
(73) Proprietor: MINNESOTA MINING AND MANUFACTURING COMPANY, St. Paul, Minnesota 55133-3427 (US)
(72) Inventor: MASUZAKI, Hisao, Hachioji Tokyo (JP); SUGII, Shinji, Hachiohji Tokyo 192 (JP)
(74) Representative: Ahner, Francis
(86) International application number: US9209828
(87) International publication number: WO9309197

(56) References cited:
- DE-A- 2 508 653

## Description

### Field of the Invention

This invention relates to a sprayable adhesive that, when applied to a substrate, exhibits a color that confirms where it has been applied and then fades upon drying.

### Background Art

For the purpose of confirming the area coated and the weight of the adhesive applied when adhesives are sprayed, adhesives colored by pigments or dyes have been used. Such adhesives do not fade or change color after spraying and drying, and are consequently undesirable for many applications.

DE-A-2 508 653 describes an adhesive which is tinted in the mass but loses its coloring immediately after it is spread on paper. The adhesive is mixed with an indicator dye that is colored in the alkaline range but which reverses into a colorless phase when in contact with an alkali-absorbing media. The reference states that the transition of the color indicator dye into its colorless phase can take place over time under the influence of air, but that this deficiency can be eliminated by the addition of triethanolamine or triisopropylamine which improves the fastness of the coloration of the mass. This reference fails to teach a colored, sprayable adhesive which fades to clear upon evaporation of a basic material.

The present invention provides a sprayable adhesive, that, immediately after application, exhibits a color which allows confirmation of the area coated and the weight of the adhesive applied. The color of the adhesive subsequently fades to clear upon drying.

### Summary of the Invention

The present invention relates to a self-fading, sprayable color adhesive. The self-fading color adhesive shows a color immediately after spraying and said color fades with the passage of time. In general it can be used advantageously where it is desirable to see the portion of the substrate initially treated with adhesive, but where it would be undesirable for the final adhesive to have color. For example, in applications involving thin, clear or lightly colored substrates, it may be undesirable to have the adhesive permanently colored, since the adhesive would permanently distort the color of the substrate.

### Detailed Description of the Invention

The invention is directed towards incorporating a color changing acid-base indicator into sprayable adhesives. More specifically, the self-fading color adhesive of the present invention comprises the following components: (a) clear or slightly colored organic solvent type adhesive, (b) basic material which readily volatilizes at ambient temperatures, (c) acid-base indictor which is colored in basic environment and turns clear in non-basic environment, and preferably (d) spraying agent.

The invention is not intended to be limited to specific adhesive composition. The non-volatile adhesive components can be selected from a wide variety of adhesive components commonly employed in adhesives including polymers of acrylic esters or partially crosslinked acrylic esters and elastomeric adhesives including partially crosslinked or soluble styrene-butadiene rubber, butyl rubber, thermoplastic block copolymers such as styrene-isoprene-styrene or styrene-butadiene-styrene block copolymers, polychloroprene rubber, natural rubber and butadiene-acrylonitrile rubber. Other classes of adhesives such as polyvinyl chloride, polyvinylacetate, polyvinylalcohol and polyvinylpyrrolidone also form suitable sprayable adhesives. The adhesive can also include tackifiers, such as polyterpene resins and hydrogenated rosin esters. A preferred acrylic ester is a crosslinked isooctyl acrylate and acrylic acid copolymer which can be made by the method described in U.S. Patent 3,578,622, Example 1.

Preferred tackifiers are hydrogenated rosin esters such as Estergum H, available from Arakawa Chemical Co., Ltd., and Pentalyn H and Foral 105 both available from Hercules Co. Other suitable tackifiers are terpene phenolic resins such as SP-560 resin available from Schenectedy Chemical Co. and hydrocarbon resins such as Arkon P115 resin available from Arakawa Company (Japan). The tackifier could also be selected from phenolic resins, and plasticizers such as dioctylphthalate (DOP) and dioctylsebacate (DOS). In the present invention, the non-volatile adhesive components and tackifiers can be used alone or in combination of two or more.

The organic solvents in the present invention may be selected from a proper quantity of known solvents which readily volatilize at normal (ambient) temperature, such as n-hexane, n-heptane, methylethylketone, isohexane, methanol, ethanol and iso-propanol.

Desirable basic materials which readily volatilize at ambient temperatures for use in the present invention, include aminoalcohols such as monoethanolamine, N,N-dimenthylethanolamine; alkylamines such as ethylamine, diethylamine, triethylamine, isopropylamine, diisopropylamine, methylamine, dimethylamine, triethylamine; ethyleneamines such as ethyleneamine, diethyleneamine; nitrogen heterocyclic compounds such as morpholine, pyridine, pyrazine, piperazine, piperidine, picolines; and ammonia. The selection of the kind and the amount of basic material used enables control of the time until fading of the color-after spraying. Suitable basic materials which readily volatilize at ambient temperatures, typically have a vapor pressure higher than about 10 mmHg at 20°C.

The acid-base indicators-used in the present invention, are colored in basic condition and fade to clear in non-basic condition, Acid-base indicators which are colored on alkali pH side (pH > 7) and turn clear on acidic pH side (i.e., pH < 7) are preferable. Typically, the preferred acid-base indicators are colored at pH between about 9 and 10 and turn clear at pH between about 6 and 8. More exactly, the following compounds are recited as preferred acid-base indicators:
dinitrophenol(2,5-dinitrophenol),
heptamethoxy red, p-nitrophenol, pinachrome,
m-nitrophenol, quinolein blue (cyanine),
Ethyl-bis(2,4-dinitrophenyl)-acetate,
p-cresolphthalein, phenolphthalein,
o-cresolphthalein, thymolphthalein,
bromophenol purple, methyl green,
nitroamine, basic fuchsine, crystal violet,
trinitrobenzoic acid, 1,3,5-trinitrobenzene,
acid fuchsine.
With the suitable selection of said acid-base indicators, it is possible to realize any color. Additionally, combinations of two or more indicators may be used.

Preferred spraying agents in the present invention are aerosol agents which include liquified propellants such as dimethylether (DME) and liquid petroleum gas (LPG) and liquified propane, butane and iso-butane, and liquified fluorocarbons and Chlorofluorocarbons. Other suitable aerosol agents may be selected from compressed gasses such as carbon dioxide and nitrogen.

The use of a self-fading color adhesive in the present invention enables confirmation of the coating area and weight of-the adhesive easily. In addition, because the adhesive turns almost clear after drying, the adhesive can be applied widely in consideration of its external appearance, as compared with conventional colored adhesives. Preferably, the adhesive is filled in a container, such as an aerosol can, so that the adhesive and indicator properties remain preserved for a long time. Therefore, the adhesive in the present invention has a high industrial value.

Further, adhesives within the scope of the present invention may exhibit somewhat different adhesive properties when exposed to basic and non-basic conditions. Utilizing this property, the adhesive can be used both for permanent adhesion and for temporary adhesion. For example, when the adhesive of Example 1 described below is used to adhere paper, the adhesive exhibits a strong adhesion to paper when the paper is attached just after spraying the adhesive (i.e. when the adhesive is still colored). In contrast, when the paper is attached after fading of the color, the paper can be exfoliated without damage.

Although the present invention has been described primarily with reference to an aerosol spray, the invention can also be employed by coating the self fading adhesive onto a substrate. In such case, essentially the same formulations can be used but without the spraying agent.

### Examples 1-3

The acrylic polymers, resins, and solvents shown in Tables 1 to 3 were mixed by a stirrer with a high shear dissolver type propeller, and were stirred uniformly to disperse the polymers finely (A). Acid-base indicators were dissolved in acetone completely and basic materials were further added (B). Then, (A) and (B) were mixed and stirred completely to be uniform(C). (C) was introduced into an aerosol can and after insertion of a valve, a spraying agent was filled into the can.

### Example 4

Polysar S-1018 rubber, which is a styrene butadiene rubber crosslinked with di-vinyl benzene, was passed through a two-roll type rubber mixer three times and then was formed into small chips. The chips were added into N-hexane and cyclohexane and Estergum H was further added. The mixture was stirred by a stirrer with a high shear dissolver type propeller to obtain uniform dispersed product (A). Phenolphthalein was dissolved into ethanol completely and ammonia water and morpholine were further added (B). (A) and (B) were mixed and stirred to be uniform (C). (C) was introduced into an aerosol can and after insertion of a valve, liquid petroleum gas (LPG) and dimethylether (DME) were filled into the can.

The adhesive composites were attached by a spray method on a steel sheet, and the coloring condition was observed with the passage of time. At the same time, said adhesives were sprayed on a steel sheet and canvas was attached thereto. Then the adhesive strength was measured by an 180 degree exfoliation test.

The results and the visible observation results were shown as follows.

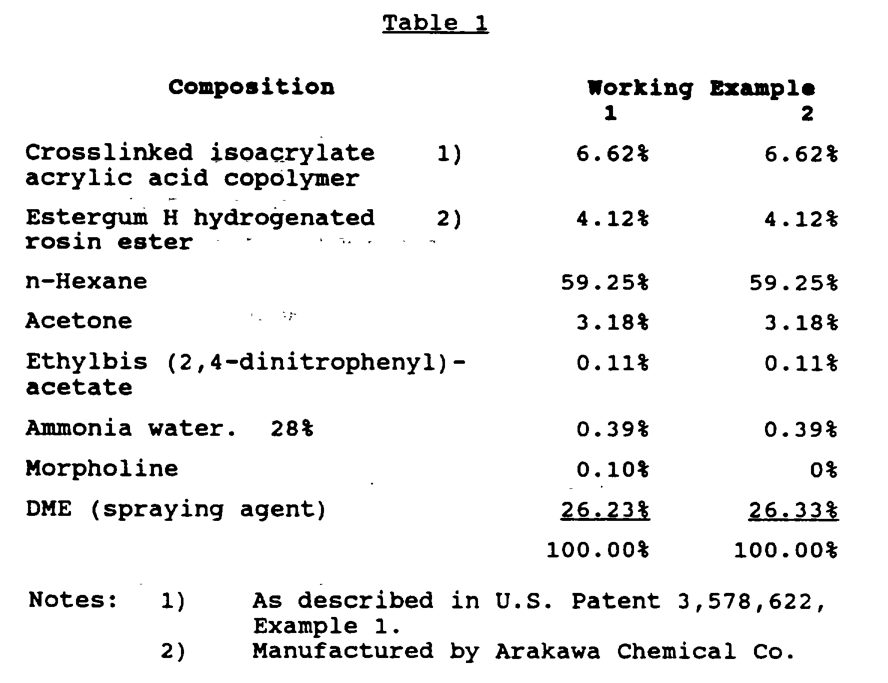

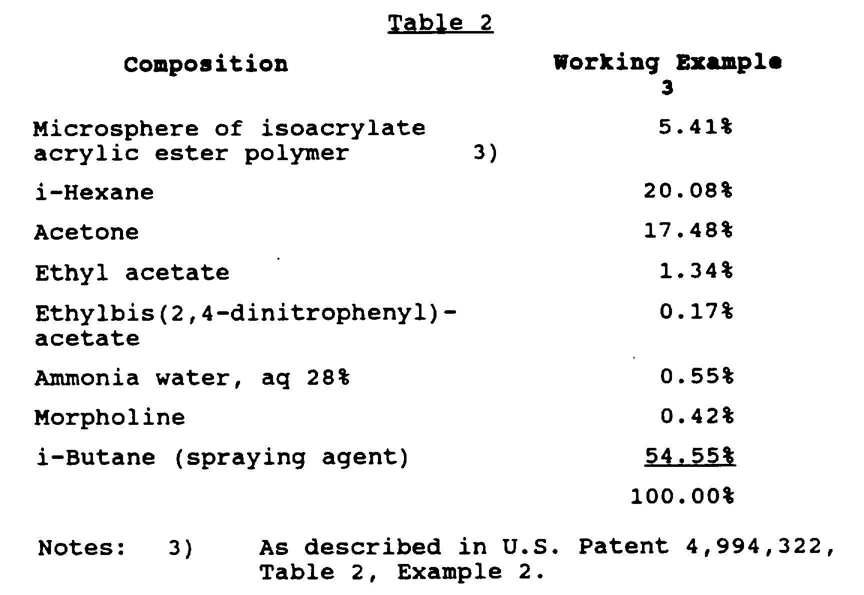

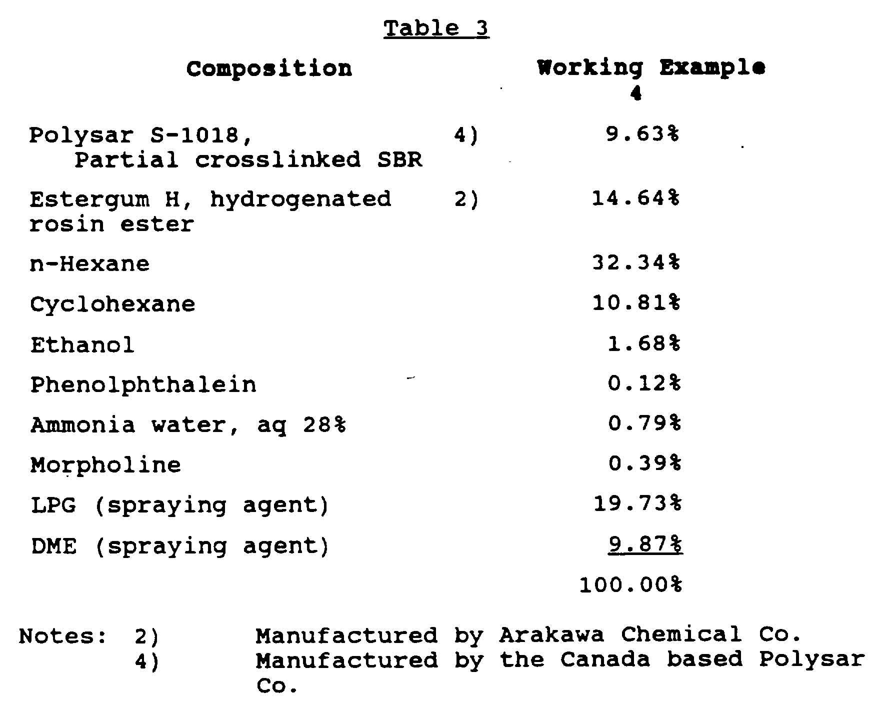

**Table 4**

| **Composition** | **Working Example** | | | |
|---|---|---|---|---|
| | **1** | **2** | **3** | **4** |
| Color of adhesive in spraying | blue | blue | blue | pink |
| Color after drying | white or clear | white or clear | white or clear | slightly brown |
| Time until turning clear (minute) | 5 | 0.5 | 10 | 1 |
| Adhesive strength (kg/25mm) canvas/steel 180 degree exfoliation | 0.6 | 0.6 | 0.3 | 2.2 |

## Claims

1. A sprayable self-fading color adhesive comprising the following four components:
a) clear or slightly colored organic solvent type adhesive,
b) basic material which readily volatilizes at ambient temperatures,
c) acid-base indicator which is colored in basic environment and turns clear in an environment having a pH of 8 or less, and
d) spraying-agent.

2. An adhesive according to Claim 1, filled in a container.

3. An adhesive according to Claim 2.

4. A dried film of the adhesive of Claim 1.

5. A substrate bearing a layer of the adhesive according to Claim 1.

6. An adhesive according to Claim 1 wherein said basic material is selected from the group consisting of aminoalcohols, alkylamines, ethyleneamines, nitrogen-containing heterocyclic compounds, and ammonia.

7. An adhesive according to Claim 6 wherein said basic material has a vapor pressure higher that about 10 mmHg at 20°C.

8. An adhesive according to Claim 1 wherein said acid-base indicators are colored at a pH of between about 9 to 10 and clear at a pH of between about 6 to 8.

9. An adhesive according to claim 8 wherein said acid-base indicator is selected from the group consisting of :
dinitrophenol(2,5-dinitrophenol),
heptamethoxy red, p-nitrophenol, pinachrome,
m-nitrophenol, quinolein blue (cyanine),
Ethyl-bis(2,4-dinitrophenyl)-acetate,
p-cresolphthalein, phenolphthalein,
o-cresolphthalein, thymolphthalein,
bromophenol purple, methyl green,
nitroamine, basic fuchsine, crystal violet,
trinitrobenzoic acid, 1,3,5-trinitrobenzene,
acid fuchsine.

## Patentansprüche

1. Sprühbarer Klebstoff mit von sich aus verblassender Färbung, der die folgenden vier Komponenten umfaßt:
a) klaren oder leicht gefärbten Klebstoff vom organischen Lösungsmittel-Typ,
b) basisches Material, das leicht bei Umgebungstemperaturen verdampft,
c) Säure-Base-Indikator, der in basischer Umgebung gefärbt ist und in einer Umgebung klar wird, die einen pH-Wert von 8 oder weniger hat, und
d) Sprühmittel.

2. Klebstoff gemäß Anspruch 1, der in einem Behälter abgefüllt ist.

3. Klebstoff gemäß Anspruch 2.

4. Getrockneter Film des Klebstoffs gemäß Anspruch 1.

5. Substrat, das eine Schicht des Klebstoffs gemäß Anspruch 1 trägt.

6. Klebstoff gemäß Anspruch 1, worin das basische Material aus der Gruppe, bestehend aus Aminoalkoholen, Alkylaminen, Ethylenaminen, Stickstoff-enthaltenden heterocyclischen Verbindungen und Ammoniak, ausgewählt ist.

7. Klebstoff gemäß Anspruch 6, worin das basische Material einen Dampfdruck hat, der größer als etwa 10 mm Hg bei 20°C ist.

8. Klebstoff gemäß Anspruch 1, worin die Säure-Base-Indikatoren bei einem pH-Wert zwischen etwa 9 und 10 gefärbt und bei einem pH-Wert zwischen etwa 6 und 8 klar sind.

9. Klebstoff gemäß Anspruch 8, worin der Säure-Base-Indikator aus der Gruppe, bestehend aus Dinitrophenol (2,5-Dinitrophenol), Heptamethoxy-Rot, p-Nitrophenol, Pinachrom, m-Nitrophenol, Chinolein-Blau (Cyanin), Ethyl-bis-(2,4-dinitrophenyl)-acetat, p-Cresolphthalein, Phenolphthalein, o-Cresolphthalein, Thymolphthalein, Bromphenol-Purpur, Methylgrün, Nitroamin, basischem Fuchsin, Kristallviolett, Trinitrobenzoesäure, 1,3,5-Trinitrobenzol, saurem Fuchsin, ausgewählt ist.

## Revendications

1. Adhésif coloré autodécolorant, pulvérisable, comprenant les quatre constituants suivants:
a) un adhésif de type solvant organique transparent ou légèrement coloré,
b) une matière basique qui se volatilise facilement aux températures ambiantes,
c) un indicateur acide-base qui est coloré dans un environnement basique et devient transparent dans un environnement ayant un pH de 8 ou moins, et
d) un agent de pulvérisation.

2. Adhésif selon la revendication 1, mis dans un récipient.

3. Adhésif selon la revendication 2.

4. Film séché d'adhésif selon la revendication 1.

5. Substrat portant une couche de l'adhésif selon la revendication 1.

6. Adhésif selon la revendication 1, dans lequel ladite matière basique est choisie dans le groupe constitué par les aminoalcools, les alkylamines, les éthylèneamines, les composés hétérocycliques azotés et l'ammoniac.

7. Adhésif selon la revendication 6, dans lequel ladite matière basique possède une pression de vapeur supérieure à environ 10 mm de Hg à 20°C.

8. Adhésif selon la revendication 1, dans lequel lesdits indicateurs acide-base sont colorés à un pH compris entre environ 9 et 10 et transparents à un pH compris entre environ 6 et 8.

9. Adhésif selon la revendication 8, dans lequel ledit indicateur acide-base est choisi dans le groupe constitué par:
le dinitrophénol (2,5-dinitrophénol), le rouge heptaméthoxy, le p-nitrophénol, le pinachrome, le m-nitrophénol, le bleu de quinoléine (cyanine), le bis-(2,4-dinitrophényl)acétate d'éthyle, la p-crésolphtaléine, la phénolphtaléine, l'o-crésolphtaléine, la thymolphtaléine, le pourpre de bromophénol, le vert de méthyle, la nitrosamine, la fuchsine basique, le violet cristallisé, l'acide trinitrobenzoïque, le 1,3,5-trinitrobenzène, la fuchsine acide.
